# EUROPEAN PATENT SPECIFICATION

(11) **EP 2 476 660 B1**
(45) Date of publication and mention of the grant of the patent: **01.04.2015**
(21) Application number: 12150917.8
(22) Date of filing: 12.01.2012
(51) Int. Cl.: C04B 35/622, C04B 38/00, C04B 38/06

(54) **Method for manufacturing ceramic elements**
VERFAHREN ZUR HERSTELLUNG VON KERAMIKELEMENTEN
PROCEDE POUR LA FABRICATION D'ELEMENTS EN CERAMIQUE

(30) Priority: 14.01.2011 IT VI20110003
(43) Date of publication of application: 18.07.2012
(73) Proprietor: Fiduciaria Vicentina S.r.l., 36100 Vicenza (VI) (IT)
(72) Inventor:
(74) Representative: Autuori, Angelo

(56) References cited:
- EP-A2- 1 571 135
- STATISTICS NEW ZEALAND: "MANUFACTURING ENERGY USE SURVEY 2006", MANUFACTURING ENERGY USE SURVEY, 22 March 2007 (2007-03-22), pages 1-14, XP002658379, Statistics House, The Boulevard, Harbour Quays, PO Box 2922, Wellington 6140, New Zealand

## Description

### Field of the invention

The present invention generally relates to the technical field of ceramics, and particularly concerns a method for manufacturing ceramic elements.

### Background of the invention

It is known that the manufacturing of ceramic elements, as for example spherical balls, bricks or granulates, includes the manufacturing of an initial mixture, generally comprising clay and water, the drying of the mixture so obtained and the later firing thereof.

From the fired semifinished product, through several procedures, the finished ceramic element is then manufactured.

It is known that industrial processes, such as tanning, paper or wood processing, as well as civil processes, such as the depuration of wastewater, generate a large quantity of waste materials, often difficult to dispose.

Moreover, from the European patent application EP1571135 a method for manufacturing spherical expanded clay elements is known which includes the use, in the initial mixture, of depuration sludge, so as to dispose and at the same time to exploit them.

The percentage of organic material present in the initial mixture of this known process is of 10% - 50% by weight with respect to the total weight of the mixture.

However this process requests in total a massive energy contribution, above all during the drying and firing step of the mixture. This is overburdened by the fact that the initial mixture is bound with water, the evaporation of which from the mixture requires energy.

### Summary of the invention

Object of the present invention is to at least partially overcome the above described drawbacks by providing a method for manufacturing ceramic elements easy to carry out and economically advantageous.

Another object of the invention is to provide a method for manufacturing ceramic elements having a favourable energetic balance.

Another object of the invention is to provide a method for manufacturing ceramic elements which allows producing electric energy.

Another object of the invention is to provide a method for manufacturing ceramic elements which allows exploiting the civil and/or industrial waste materials.

Another object of the invention is to provide a method for manufacturing ceramic elements which allows recovering as much as possible the incoming energy.

These and other objects, as better explained hereafter, are fulfilled by a method for manufacturing ceramic elements according to claim 1.

In its more general aspect, the method according to the invention includes the following step, in sequence: a) providing a mixture to be dried; a') pelletizing in an extruder the mixture to be dried; b) passage of the pelletized mixture to be dried in a drier for the drying thereof; c) passage of the pelletized dried mixture in an oven for the firing thereof; and d) manufacturing a ceramic object from said fired mixture.

As used herein, the expression "providing" or derivates thereof is intended to indicate, unless otherwise indicated, the preparation of a given component to a given process step, so including any preventive treatment suitable to the optimal carrying out of the step of interest, from the simple drawing and possible stocking to the purification, to the adding of other materials, such as for example inert materials and/or sand, to thermal and/or chemical and/or physical pre-treatments and the like.

The method according to the invention allows manufacturing several ceramic elements, depending on the technique employed during the step d). In particular, as better shown hereafter, the method according to the invention allows producing expanded clay spherical elements, bricks or ceramic granulate. These ceramic elements have high insulating properties, from the thermal as well as from the acoustic point of view.

The mixture to be dried consists essentially of 50% to 80% by weight of clay and 20% to 50% by weight of at least one binder including 50% to 80% by weight of organic elements.

As used herein, the expression "% by weight" or the like is intended to indicate, unless otherwise indicated, the percentage by weight of a given component with respect to the total mass in which it is inserted, on a dry base.

In this way, a high quantity of elements with high heating value is introduced in the mixture to be dried, which energy can be recovered in the following steps.

In fact, below 20% of binder, the quantity of organic elements in the mixture would be insufficient to obtain a suitable subsequent heat generation, whereas over 50% of binder the final ceramic elements would not have satisfying mechanical properties.

The binder includes a liquid phase and a solid phase.

The binder is at least one civil and/or industrial waste material, so as to exploit it and to eliminate the problem of the disposal thereof.

Advantageously, the binder consists of both used oils and civil or industrial sludge chosen in the group consisting of: leather industry sludge, paper industry sludge, wood processing industry sludge, waste water treatment sludge, dredging sludge, wetland sludge or a mixture of two or more thereof.

During the firing step c) a step c') is accomplished of generation of electric energy, so as to recover the energy produced by the combustion of the organic material.

Thanks to these features, the method according to the invention allows to produce good quality ceramic elements stating from civil and/or industrial waste materials, at the same time solving the problem of the disposal and of the exploitation thereof.

Moreover, thanks to the selection of industrial and/or civil waste materials with a high quantity of organic elements, it is possible to generate remarkable quantities of energy which can be employed for the generation of electric energy.

Preferably, the mixture to be dried is not bound with water, so as to avoid an energy waste to have water evaporate in the following steps.

For this purpose, the step c') of generation of electric energy may be carried out by conveying the exhaust gases outgoing from the firing means, which may comprise an oven, into a steam generator for the following feeding of a turbine.

Appropriately, the method according to the invention may comprise a step c") of cooling of the mixture outcoming from the firing oven for recovering the heat thereof and conveying it into the drying means, which may include a dryer.

The mixture to be dried has a humidity comprised between 10% and 25% by weight with respect to the total weight of the mixture.

As used herein, the expression "humidity" is intended to indicate, unless otherwise specified, the percentage by weight of water with respect to the total weight of the mixture.

In this way, the waste of energy to have water evaporate in the following steps can be avoided.

Advantageous embodiments of the invention are defined according to the dependent claims.

### Brief description of the drawings

Further features and advantages of the invention will appear more evident upon reading the detailed description of some preferred, non-exclusive embodiments of a method for manufacturing ceramic elements according to the invention, which are described as non-limiting examples with the help of the annexed drawings, in which:
**FIG.1** is a flowchart of the method according to the invention;
**FIG. 2** is a schematic view of a plant for manufacturing spherical expanded clay elements according to a particular embodiment of the method according to the invention.

### Detailed description of some preferred embodiments of the invention

Referring to the above figures, the method according to the invention is particularly suitable for the production of ceramic elements of several types, such as for example spherical expanded clay elements, bricks or ceramic granulate.

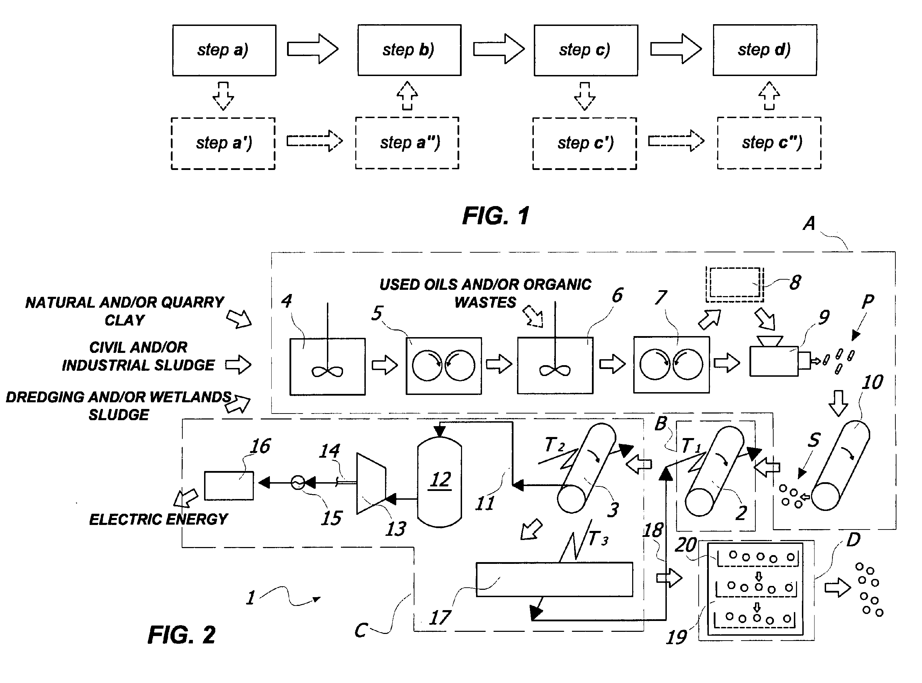

FIG. 2 illustrates, as non-limiting example, a plant **1** for manufacturing spherical expanded clay elements. However, it is understood that this plant, with the appropriate changes, may also be used for manufacturing bricks or ceramic granulates, without departing from the scope of the invention defined by the annexed claims.

In its most general aspect, the method according to the invention provides the following steps, in sequence: a) providing a mixture to be dried, which can be done in the area **A** of the plant; b) passage of the mixture to be dried trough drying means **2**, which may comprise a dryer for the drying thereof, which can be done in the area **B** of the plant **1**; c) passage of the dried mixture through firing means **3**, which may comprise an oven, for firing the dried mixture, which can be done in the area **C** of the plant **1**; and d) manufacturing a ceramic element from said fired mixture, which can be done in the area **D** of the plant **1**.

The areas **A**, **B**, **C** and **D** of the plant **1** are indicated by closed dashed lines.

In the area **A** may be placed the raw materials, which may be simply drawn from a stocking site inside or outside of this area or may come directly from outer sites and be brought by means of suitable transport means, for example lorries or the like.

In a preferred, non-exclusive embodiment the raw materials may be essentially two: a natural or quarry clay mixture and at least one binder.

The quarry clay mixtures have a very high percentage of clay, normally over 80%. To further arise the clay percentage dredging or phytoremediation sludge may be added, which have a high clay percentage too, generally over 50%.

The binder must include at least 40% of organic compound, and preferably from 50% to 80% of organic compound. The mixture must not be mixed by water.

Advantageously, the binder may include, respectively may consist of, civil and/or industrial waste material.

In general, the binder may comprise used oils, possibly of the industrial type, organic wastes, for example wastes from animal breeding, and/or civil or industrial sludge chosen among the group comprising: sludge of the leather industry, paper industry sludge, wood processing industry sludge, waste water treatment sludge or a mixture of two or more thereof.

All these binders generally have a high percentage of organic compounds, usually over 40%.

The raw materials may be processed in several ways, so that the mixture to be dried, to be inserted into the dryer **2**, comprises from 50% to 80% by weight of clay and from 20% to 50% by weight of binder. The mixture to be dried may also contain inert material, such as sand or rubble, heavy metals coming from the industrial sludge used, earth and possible impurities.

The ratio clay/binder in the mixture to be dried depends on the chemical-physical properties thereof, for instance on the viscosity of the binder, on its humidity, on the fact that the clay is "fat" or "lean" and the like.

In a particularly preferred embodiment, the binder may consist of civil and/or industrial sludge as well as of used oils and/or liquid o semi liquid organic waste.

As used herein, the references to the liquid and solid aggregation states are intended at standard temperature and pressure (T= 25 °C, P= 1 atm).

In this case, there may be a first step a') of preparation of a first mixture, which may be composed by clay mixture, possibly dredging or phytoremediation sludge and civil and/or industrial sludge, and a later second step a") of addition to the mixture of the used oils and/or of the organic waste for the manufacturing of the mixture to be dried.

This may take place only if the first mixture has humidity lower than 20%, otherwise the later addition of the used oils and/or of the organic waste would produce ceramic elements with unsatisfying mechanical properties.

The first mixture is prepared by inserting the starting components into the first mixer **4**, which may be of the horizontal type, and from there into the first mill **5**, of the opposed cylinders type, to reduce the first mixture to a grain size of about 1-10 mm. Upstream of the first mixer **4** means may be for controlling the humidity of the fist mixture incoming into the mixer.

Later, the first mixture is introduced into the second mixer **6**, which may be similar to the first one, wherein the used oils and/or of the organic waste are added.

Appropriately, the civil and/or industrial sludge may be present in the mixture to be dried in a weight percentage comprised between 10% and 40%, preferably between 20% and 40% and even more preferably between 30% and 40%, whereas the used oils and/or the organic waste may be present in the mixture to be dried in a weight percentage comprised between 5% and 20%.

From the mixer **6**, the mixture to be dried may pass to a second mill **7**, which may be similar to the first one, to reduce the mixture to an average grain size of 1 mm.

From there, the mixture to be dried may be possibly stocked in accumulators **8**, which may be for example containers in metal boxes, which allows obviating to possible supply discontinuities of the raw materials.

The mixture to be dried may be then pelletized in an extruder **9**, to manufacture pellets **P** with a diameter of 4-25 mm and a length of 15-25 mm.

From there the pellets **P** may pass into a rotating drum **10** which, rotating at high speed, gives them the generally spherical shape **S**, and may be then introduced into the dryer **2**, wherein the above drying step b) may take place.

This step is only accomplished if the ceramic elements to be manufactured have spherical shape. Instead, if bricks or ceramic granulate is to be manufactured, the pellets outcoming from the extruder **9** may be directly dried in the dryer **2**.

Appropriately, the latter may be a rotating drum or a drying tunnel, of *per se* known type, in which the mixture, appropriately prepared by means of the previous processing steps, is blown by a air current at a temperature **T₁** of about 160 - 180 °C to pass from the initial humidity content of about 15% to 25% to a final humidity of about 1% to 3%. In general, for the production of spherical elements the employing of a rotating drum is preferred, whereas for the production of bricks or granulate the employing of a tunnel dryer is preferred.

The product outcoming from the dryer **2**, which has solid consistence, later passes into the oven **3**, in which the firing step c) of the method according to the invention takes place.

The oven **3** fires the previously dried mixture at progressively higher temperatures **T₂** up to about 1000 - 1200 °C, so that the ceramic material passes from a solid to a paste phase, then to a glass phase.

In this way, the pollutant substances which are present in the initial sludge are vitrified, and therefore inertized.

The fired product has high mechanical and physical-chemical properties, is highly porous with closed porosity, has low density, of about 0,6/1 kg/m³, and is perfectly insulating from a thermal and acoustic point of view.

During the firing step c), from the fired pellets/spherical elements a gas phase generate which expands them, reducing the density thereof.

The gases generated during the firing step are rich in hydrocarbon, because of the high quantity of organic material of the initial mixture. This fact may be appropriately exploited to carry out a step c") of generation of electric energy.

In fact, the gases may be appropriately conveyed, by means of a pipeline **11**, to feed a steam generator **12**. The last one, in turn, may feed a turbine **13** for the production of electric energy, which may be exploited for the working of the plant **1** and/or may be sold to the electric power distribution network.

For this purpose, the power shaft **14** of the turbine **13** may be connected, through an alternator **15**, to a machine **16** for transforming the mechanical energy into electric energy.

The oven **3** may be of any type. Preferably, it is a rotating drum for the production of the spherical elements, so as to avoid the aggregation of the single elements, whereas it is a tunnel oven for the production of bricks or of granulate.

In particular, if the oven **3** is a rotating drum, in order to effectively control the combustion of the spherical elements, the burner may be of tangential type.

After the firing a cooling step c") of the fired elements may be accomplished, which may be carried out in a suitable forced convection cooling tunnel **17** with air at room temperature **T₃**.

The optimal thermal gradient to avoid embrittlement problems of the products may be 150 - 300 °C, except for the zone between 500° C and 650°C, wherein it is necessary cooling the products much more slowly, around 50°C/hour.

Considering the high temperature of the products outcoming from the oven **3**, during this step the convective current may be conveyed, through a fitting pipeline **18**, to the dryer **2**, so as to recover heat therefrom.

Once the products are cooled, a step d) of manufacturing of the several ceramic elements may be accomplished, which may take place in the area **D** of the plant **1**. This step is different according to the final product.

In fact, for the manufacturing of the spherical elements, the step d) provides the separation thereof for gravity in a gradation machine **19** provided with a series of sieves **20**, which may be chosen depending on the desired diameters.

On the other hand, to obtain bricks or ceramic granulates, the product outcoming from the tunnel oven and later cooled is a monolithic block, which may be cut to obtain bricks of suitable size or crumbled to obtain granulate.

The invention can be more readily understood thanks to the following example, which is provided as a non limiting embodiment of the invention.

### Example

A first mixture of clay, phytoremediation sludge and a binder consisting of sludge of the leather industry and waste water treatment sludge is at first prepared and then inserted into the first mixer **4** and later into the first mill **5**, in which the counter-rotating cylinders have a speed of 350 rev/min.

The first mixture, reduced by the mill **5** to an average grain size of about 10 mm, is then introduced into the second mixer **6**. Therein, another binder consisting of used oil is added to the first mixture.

The mixture so prepared, suitable to be extruded, may have the following composition:

| | | |
|---|---|---|
| - clay 60% | | |
| - binder 40% wherein | - leather industry sludge + depuration | 35% |
| | - used oil | 5% |

Therefore, the mixture to be dried is firstly introduced into the second mill **7** to reduce the grain size thereof to 1 mm, then pelletized in the extruder **9**, so as to manufacture pellets **P** with a length of 20 mm and a diameter of 15 mm, having pasty consistency, humidity of about 20% and a vacuum degree of 20%-50%. Because of frictions, they also have a temperature of about 50°C-80°C.

The pellets **P** are then inserted into the drum **10**, rotating at a speed of 10/40 rev./min., wherein they are shaped into spheres **S** with a diameter of about 10-20 mm.

The spheres **S** so formed are introduced into the dryer **2**, from which they outcome with a humidity lower than 2% and a temperature of about 180°C. The consistency of the spheres **S** is hard and undeformable under the pressure of the fingers, even if they are so brittle that they can be easily broken with a hammer or like tool.

The spheres **S** so dried are inserted into the oven **3**, in which they are fired at a temperature of about 1000-1200 °C. In this step, they expand, slightly increasing their diameter which may be comprised between 15 mm and 25 mm.

The exhaust gases outcoming from the oven **3** are conveyed, through the pipeline **11**, to the heater **12**. The last one is suitable to feed the turbine **13**, which in turn is suitable to activate the machine for the production of electric energy **16**. From the steam generator **12** a current of fresh air (filtered) at about 250 °C comes out, the heat of which can be recovered.

The spheres **S**, outcoming from the oven **3** at a temperature of about 1100 °C, are introduced into the cooling tunnel **17**, from which they come out at a temperature around 200 °C, then sieved in the gradation machine **19** and finally stored.

From the energetic point of view, on the basis of the experience of the ceramic industry, it is possible to estimate that the whole production process of the spheres **S** needs about 750 KWh per ton of product.

This value is mainly given during the firing step c), which takes place at very high temperatures, apart from the amount of electric energy necessary to have the several machines work. Another energy amount would be necessary in the drying step b), but, as visible in FIG. 2, the dryer **2** can use the heat recovered from the cooling of the spheres **S** in the tunnel **17**.

The depuration or industry sludge, because of the high percentage of organic material, generally has a heating value of 3500 - 5000 KWh per ton of dry product. Moreover, the combustible oil has a heating value of 9000 - 10000 KWh per ton of dry product.

Therefore, the heating value of the above binder is about 1225 - 1925 KWh per ton produced by the sludge and about 450 - 500 KWh per ton produced by the combustible oil.

Therefore, the global energetic balance of the process, considering the maximum heating value of the binder, is:
1925 KWh/ton + 500 KWh/ton - 750 KWh/ton = 1675 KWh/ton
This energy is used in the step c') of production of electric energy.

In other words the process according to the invention, besides allowing producing ceramic elements in a simple and cost-effective way and exploiting industrial and/or civil waste products, has also an extremely favourable energetic balance.

In fact, the process according to the invention not only allows recovering all the incoming energy, but has also an energy *surplus* which is employed for the production of electric energy. This obviously turns into an important economic advantage.

The finished product has been tested to verify its real inertization after the above process. The classic chemical analysis has given the results reported in the following table 1, wherein the third column refers to the analysis carried out on the dried spheres **S** and the fourth column refers to the analysis carried out on the fired spheres **S**.

**Table 1**

| **Compound** | **Size unit** | **Dried spheres S** | **Fired spheres S** |
|---|---|---|---|
| Ammonium (NH4) | mg/kg Ms | 1000 | <5 |
| total Kjeldahl Nitrogen (NTK) | g/kg Ms | 7,6 | <0,10 |
| Phenol index | mg/kg Ms | 0,25 | <0,10 |
| Nitrates (N) | mg/kg Ms | <5,0 | <5,0 |
| Nitrites (N) | mg/kg Ms | <5,0 | <5,0 |
| Phosphorus (P) | mg/kg Ms | 15000 | 16000 |
| Sulphates (SO₄) | mg/kg Ms | 9000 | 3600 |
| Chlorides (Cl) | mg/kg Ms | 3500 | 30 |
| Total organic carbon (COT) | % Ms | 6 | <0,10 |
| Fluorides (F) | mg/kg Ms | <25 | N.M |

From the above analysis it is apparent that during firing almost all the organic carbon has been cracked, and that chlorides and nitrogen compounds was oxidized and volatilized. The concentration of sulphates is definitely reduced.

In practice, the materials oxidizable at high temperatures have been almost totally extracted.

The analysis concerning heavy metals is reported in the following table 2.

**Table 2**

| **Compound** | **Size unit** | **Dried spheres S** | **fired spheres S** |
|---|---|---|---|
| Aluminium (Al) | mg/kg Ms | 14000 | 18000 |
| Antimony (Sb) | mg/kg Ms | 5,8 | 1,2 |
| Arsenic (As) | mg/kg Ms | 7 | 5 |
| Barium (Ba) | mg/kg Ms | 155 | 150 |
| Beryllium (Be) | mg/kg Ms | 0,58 | 0,35 |
| Cadmium (Cd) | mg/kg Ms | 1,5 | <0,10 |
| Calcium (Ca) | mg/kg Ms | 96000 | 70000 |
| Chrome (Cr) | mg/kg Ms | 50 | 45 |
| Cobalt (Co) | mg/kg Ms | 6,2 | 6,3 |
| Cupper (Cu) | mg/kg Ms | 180 | 135 |
| Tin (Sn) | mg/kg Ms | 13 | 8 |
| Iron (Fe) | mg/kg Ms | 44000 | 25000 |
| Lanthanum (La) | mg/kg Ms | 11 | 14 |
| Lithium (Li) | mg/kg Ms | 13 | 9,8 |
| Magnesium (Mg) | mg/kg Ms | 4600 | 3600 |
| Manganese (Mn) | mg/kg Ms | 210 | 135 |
| Mercury (Hg) | mg/kg Ms | 0,92 | <0,05 |
| Molybdenum (Mo) | mg/kg Ms | 2,5 | 47 |
| Nickel (Ni) | mg/kg Ms | 20 | 18 |
| Gold (Au) | mg/kg Ms | <5,0 | <5,0 |
| Palladium (Pd) | mg/kg Ms | <5,0 | <5,0 |
| Platinum (Pt) | mg/kg Ms | 9,9 | 6,2 |
| Lead (Pb) | mg/kg Ms | 58 | 7,8 |
| Potassium (K) | mg/kg Ms | 3200 | 1600 |
| Scandium (Se) | mg/kg Ms | 1,5 | 3,2 |
| Selenium (Se) | mg/kg Ms | <1 | <1 |
| Silica (Si) | mg/kg Ms | 2500 | 900 |
| Sodium (Na) | mg/kg Ms | 2600 | 1000 |
| Sulphur (S) | mg/kg Ms | 7800 | 1800 |
| Strontium (Sr) | mg/kg Ms | 360 | 320 |
| Tellurium (Te) | mg/kg Ms | 5 | 4,5 |
| Thallium (TI) | mg/kg Ms | <2,0 | <2,0 |
| Titanium (Ti) | mg/kg Ms | 210 | 840 |
| Tungsten (W) | mg/kg Ms | <50 | <50 |
| Vanadium (V) | mg/kg Ms | 48 | 35 |
| Zinc (Zn) | mg/kg Ms | 450 | 300 |
| Zircon (Zr) | mg/kg Ms | <2,0 | 3,3 |

From this analysis it is apparent that during the firing many heavy metals have been removed, even remarkably.

As to the other organic pollutant elements, the following results were obtained:
- no polycyclic aromatic hydrocarbon
- no monoaromatic solvent
- zero Hydrocarbon index
- no chlorinated solvents
- no trace of PCB

On the fired spheres **S** leaching and percolation tests have been carried out, in order to verify their behaviour in contact with rain water during the stocking thereof, or with respect to the mixing waters, for a possible use in concretes. The results of the analysis are reported in the following table 3.

**Table 3**

| **Compound** | **Leached fraction [mg/kg Ms]** | **Analysed Eluent [µg/l]** | **Percolated fraction [mg/kg Ms]** | **Percolated fraction [µg/l]** |
|---|---|---|---|---|
| Aluminium (Al) | 0,5 | 45 | 6,5 | 650 |
| Antimony (Sb) | 0 | <5,0 | 0 | <5,0 |
| Arsenic (As) | 0,053 | 5,5 | 0 | <5,0 |
| Barium (Ba) | 0,8 | 10 | 0,85 | 10 |
| Beryllium (Be) | 0 | <2,0 | 0 | <2,0 |
| Cadmium (Cd) | 0 | <0,1 | 0, 001 | 0,1 |
| Calcium (Ca) | 3500 | 32000 | 2900 | 280000 |
| Chromium (Cr) | 0,15 | 16 | 0 | <2,0 |
| Cobalt (Co) | 0 | <2,0 | 0 | <2,0 |
| Cupper(Cu) | 0 | <2,0 | 0 | <2,0 |
| Tin (Sn) | 0 | <15 | 0 | <15 |
| Iron (Fe) | 0 | <20 | 0 | <20 |
| Lanthanum (La) | 0 | <6,0 | 0 | <6,0 |
| Lithium (Li) | 0,5 | 50 | 0,57 | 56 |
| Magnesium (Mg) | 0,4 | 40 | 0,43 | 43 |
| Manganese (Mn) | 0 | <1,0 | 0 | <1,0 |
| Mercury (Hg) | 0 | <0,03 | 0 | <0,03 |
| Molybdenum (Mo) | <0,5 | 550 | <0,5 | 490 |
| Nickel (Ni) | 0 | <5,0 | 0 | <5,0 |
| Gold (Au) | 0 | <5,0 | 0 | <5,0 |
| Palladium (Pd) | 0 | <50 | 0 | <50 |
| Platinum (Pt) | 0 | <45 | 0 | <45 |
| Lead (Pb) | 0 | <5,0 | 0 | <5,0 |
| Potassium (K) | 40 | 3700 | 55 | 5500 |
| Scandium (Se) | 0 | <2,0 | 0 | <2,0 |
| Selenium (Se) | 0 | <5,0 | 0,065 | 6,2 |
| Silica (Si) | 25 | 2800 | 92 | 9200 |
| Sodium (Na) | 25 | 2400 | 28 | 2800 |
| Sulphur (S) | 1200 | 110000 | 1100 | 110000 |
| Strontium (Sr) | 3,5 | 350 | 3,5 | 350 |
| Tellurium (Te) | 0 | <15 | 0 | <15 |
| Thallium (Tl) | 0 | <5,0 | 0 | <5,0 |
| Titanium (Ti) | 0 | <2,0 | 0 | <2,0 |
| Tungsten (W) | 0,7 | 68 | 0,4 | 40 |
| Vanadium (V) | 0,26 | 27 | 0,21 | 21 |
| Zinc (Zn) | 0 | <2,0 | 0,025 | 2,5 |
| Zircon (Zr) | 0 | <12 | 0 | <10 |

These results allow concluding that the oxidizable compounds have been removed from the spheres and have passed into gases and atmospheric wastes, whereas the other pollutant elements have been inertized and permanently blocked in the ceramic body.

The last one is inert and not pollutant even in contact with water, which makes it perfectly suitable for domestic use, for example in the building field.

From the above described results, it appears evident that the invention fulfils the intended scopes.

The method according to the invention are susceptible of a number of changes and variants, within the inventive concept disclosed in the appended claims. All the details thereof may be replaced by other technically equivalent parts, and the materials may vary depending on different needs, without departing from the scope of the invention, as defined by the claims.

## Claims

1. A method for manufacturing ceramic elements, including the following steps:
a) providing a mixture to be dried;
a') pelletizing in an extruder said mixture to be dried;
b) drying said pelletized mixture;
c) firing said pelletized dried mixture;
d) manufacturing a ceramic object from said fired pelletized mixture;
**characterized in that**:
- the mixture to be dried consists essentially of from 50% to 80% by weight of dry clay and from 20% to 50% by weight of at least one binder, the latter including 50% to 80% by weight of dry organic matter;
- said binder is at least one civil and/or industrial waste material;
- the firing step c) includes a step c') of generating electricity, in such a manner to recover energy from the combustion of the organic matter of said mixture to be dried;
- said at least one binder includes a liquid phase and a solid phase;
and further **characterized in that** said binder consists of both civil or industrial sludge and used oil, said civil or industrial sludge being chosen among the group consisting of: sludge of the leather industry, paper industry sludge, wood processing industry sludge, waste water treatment sludge, dredging sludge, wetlands sludge or a mixture of two or more thereof, said step a) of providing said mixture to be dried including a first step a') of providing a first mixture comprising said clay and civil and/or industrial sludge and a second step a") of adding to said first mixture said used oils to provide said mixture to be dried, said first mixture having a humidity lower than 20%, said mixture to be dried having a humidity of 10% to 25% with respect to the total weight of the mixture.

2. Method according to claim 1, wherein said firing step c) is accomplished by passing said dried mixture into firing means **(3),** the exhausted gases flowing out from said firing means **(3)** being susceptible to operate a turbine **(12)** to carry out said step c') of generating electricity.

3. Method according to claim 2, wherein said drying step b) is accomplished by passing said mixture to be dried into drying means **(2),** said firing step c) comprising a step c") of cooling said mixture and recovering heat therefrom to convey it into said drying means (2).

4. Method according to claim 1, 2 or 3, wherein said civil and/or industrial sludge are present in said mixture to be dried in a weight percentage of 10% to 40%, preferably of 20% to 40% and even more preferably of 25% to 35%, said used oils and/or organic wastes being present in said mixture to be dried in a weight percentage of 10% to 20%.

## Patentansprüche

1. Verfahren zur Herstellung von Keramikelementen, folgende Schritte beinhaltend:
a) Bereitstellen einer zu trocknenden Mischung,
a') Pelletieren der zu trocknenden Mischung in einem Extruder,
b) Trocknen der pelletierten Mischung,
c) Brennen der pelletierten, getrockneten Mischung,
d) Herstellen eines Keramikgegenstandes aus der gebrannten, pelletierten Mischung,
**dadurch gekennzeichnet, dass**:
die zu trocknende Mischung im Wesentlichen aus 50 bis 80 Gew.-% Trockentonmasse und zu 20 bis 50 Gew.-% aus mindestens einem Bindemittel besteht, wobei Letzteres 50 bis 80 Gew.-% organische Trockenmasse beinhaltet,
das Bindemittel Haus- und/oder Industrieabfallmaterial ist,
der Brennschritt c) einen Schritt c') des Erzeugens von Elektrizität beinhaltet, in einer Weise, dass Energie aus dem Verbrennen der organischen Masse der zu trocknenden Mischung zurückgewonnen wird,
das mindestens eine Bindemittel eine flüssige Phase und eine feste Phase beinhaltet,
und ferner **dadurch gekennzeichnet, dass** das Bindemittel aus sowohl Haus- oder Industrieklärschlamm als auch Altöl besteht, wobei der Haus- oder Industrieklärschlamm aus der Gruppe ausgewählt wird, die aus Folgendem besteht: Klärschlamm aus der Lederindustrie, der Papierindustrie, der holzverarbeitenden Industrie, aus der Abwasseraufbereitung, Baggerschlamm, Schlamm aus Pflanzenkläranlagen oder einer Mischung aus zwei oder mehr davon, wobei der Schritt a) des Bereitstellens der zu trocknenden Mischung einen ersten Schritt a') des Bereitstellens einer ersten Mischung beinhaltet, welche die Tonmasse und den Haus- und/oder Industrieklärschlamm umfasst, und einen zweiten Schritt a") des Zusetzens von Altölen zur ersten Mischung, um eine zu trocknende Mischung bereitzustellen, wobei die erste Mischung einen Feuchtegehalt von weniger als 20 % aufweist, wobei die zu trocknende Mischung bezogen auf das Gesamtgewicht der Mischung einen Feuchtegehalt von 10 bis 25 % aufweist.

2. Verfahren nach Anspruch 1, wobei der Brennschritt c) ausgeführt wird, indem die getrocknete Mischung in Brennmittel (3) geleitet wird, wobei die Abgase, die aus den Brennmitteln (3) strömen, geeignet sind, eine Turbine (12) anzutreiben, um den Schritt c') des Erzeugens von Elektrizität auszuführen.

3. Verfahren nach Anspruch 2, wobei der Trocknungsschritt b) ausgeführt wird, indem die zu trocknende Mischung in Trocknungsmittel (2) geleitet wird, wobei der Brennschritt c) einen Schritt c") des Kühlens der Mischung und des Rückgewinnens von Wärme daraus umfasst, um diese in die Trocknungsmittel zu überführen.

4. Verfahren nach Anspruch 1, 2 oder 3, wobei der Haus- und/oder Industrieklärschlamm in der zu trocknenden Mischung zu 10 bis 40 Gew.-%, vorzugsweise 20 bis 40 Gew.-% und noch bevorzugter 25 bis 35 Gew.-% vorhanden ist, wobei das verwendete Altöl und/oder die organischen Abfälle in der zu trocknenden Mischung zu 10 bis 20 Gew.-% vorhanden sind.

## Revendications

1. Procédé de fabrication d'éléments en céramique, comprenant les étapes suivantes :
a) la fourniture d'un mélange à sécher;
a') le bouletage, dans une extrudeuse, dudit mélange à sécher;
b) le séchage dudit mélange bouleté ;
c) la cuisson dudit mélange bouleté séché ;
d) la fabrication d'un objet en céramique à partir dudit mélange bouleté cuit ;
**caractérisé en ce que** :
- le mélange à sécher se compose sensiblement de 50% à 80% en poids d'argile sèche et de 20% à 50% en poids d'au moins un liant, ce dernier comprenant de 50% à 80% en poids de matière organique sèche ;
- ledit liant est au moins une matière de déchets civils et/ou industriels ;
- l'étape c) de cuisson comprend une étape c') de génération d'électricité de manière à récupérer une énergie de la combustion de la matière organique dudit mélange à sécher;
- ledit au moins un liant comprend une phase liquide et une phase solide ; et caractérisé en outre en ce que ledit liant se compose à la fois de boues civiles ou industrielles et d'huile usée, lesdites boues civiles ou industrielles étant choisies dans le groupe se composant de ce qui suit : des boues de l'industrie du cuir, des boues de l'industrie du papier, des boues de l'industrie du traitement du bois, des boues du traitement des eaux usées, des boues de dragage, des boues de zones humides ou un mélange de deux ou plusieurs de celles-ci, ladite étape a) de la fourniture dudit mélange à sécher comprenant une première étape a') consistant à fournir un premier mélange comprenant ladite argile et lesdites boues civiles et/ou industrielles et une deuxième étape a") consistant à ajouter, au dit premier mélange, lesdites huiles usées pour fournir ledit mélange à sécher, ledit premier mélange présentant une humidité inférieure à 20%, ledit mélange à sécher présentant une humidité de 10% à 25% par rapport au poids total du mélange.

2. Procédé selon la revendication 1, dans lequel ladite étape c) de cuisson est accomplie en faisant passer ledit mélange séché dans des moyens de cuisson (3), les gaz d'échappement sortant desdits moyens de cuisson (3) étant susceptibles de faire fonctionner une turbine (12) pour effectuer ladite étape c') de génération d'électricité.

3. Procédé selon la revendication 2, dans lequel ladite étape b) de séchage est accomplie en faisant passer ledit mélange à sécher dans des moyens de séchage (2), ladite étape c) de cuisson comprenant une étape c") de refroidissement dudit mélange et de récupération d'une chaleur de celui-ci pour la transporter dans lesdits moyens de séchage (2).

4. Procédé selon la revendication 1, 2 ou 3, dans lequel lesdites boues civiles et/ou industrielles sont présentes dans ledit mélange à sécher dans un pourcentage de 10% à 40% en poids, de préférence de 20% à 40% en poids et avec plus de préférence de 25% à 35% en poids, lesdites huiles usées et/ou lesdits déchets organiques étant présents dans ledit mélange à sécher dans un pourcentage de 10% à 20% en poids.
